# EUROPÄISCHE PATENTSCHRIFT

(11) **EP 1 531 112 B1**
(45) Veröffentlichungstag und Bekanntmachung des Hinweises auf die Patenterteilung: **03.06.2009**
(21) Anmeldenummer: 04026371.7
(22) Anmeldetag: 05.11.2004
(51) Int. Cl.: B62D 15/02, G05D 1/02

(54) **Fahrerassistenzsystem zur Unterstützung der Spurhaltung eines Kraftfahrzeuges**
Driving assist system for supporting lane keeping of a vehicle
Système d'assistance à la conduite pour aider à la tenue de route d'un véhicule

(30) Priorität: 13.11.2003 DE 10352967
(43) Veröffentlichungstag der Anmeldung: 18.05.2005
(73) Patentinhaber: AUDI AG, 85045 Ingolstadt (DE)
(72) Erfinder: Buschardt, Boris, Dr., 85049 Ingolstadt (DE)
(74) Vertreter: Thielmann, Frank

(56) Entgegenhaltungen:
- EP-A- 0 736 414
- EP-A- 1 049 051
- EP-A- 1 087 360
- EP-A- 1 371 948
- EP-A- 1 422 586
- EP-A- 1 426 906
- WO-A-03/004299
- WO-A-20/04088611
- JP-A- 10 198 876
- US-A- 5 765 116

## Beschreibung

Die Erfindung betrifft ein Fahrerassistenzsystem zur Unterstützung der Spurhaltung eines Kraftfahrzeugs.

Aus der nachveröffentlichten EP 1 426 906 A ist ein Verfahren zur Warnung eines Führers eines Kraftfahrzeugs bekannt, wobei das Kraftfahrzeug ein Fahrspurerkennungssystem aufweist und eine Warnung an den Kraftfahrzeugführer ausgegeben wird, wenn die Fahrspurerkennung eine Gefahrsituation detektiert. Der Zeitpunkt sowie die Dauer und/oder die Art des Warnsignals der Fahrspurerkennung ist eine Funktion der Verkehrssituation und/oder der Fahrzeugsituation und/oder der Fahrzeugumgebung. Abhängig von bestimmten Fahrzeugzuständen kann eine Unterdrückung der Warnung durchgeführt werden.

Aus der ebenfalls nachveröffentlichten EP 1 422 586 A ist ein Verfahren zur Überwachung eines Kraftfahrzeugführers unter Verwendung einer Fahrspurerkennung offenbart, wobei eine Warnung an den Kraftfahrzeugführer ausgegeben wird, wenn die Fahrspurerkennung eine Gefahrsituation detektiert. Die Aktivität des Kraftfahrzeugführers wird bei dem bekannten Verfahren bestimmt und die Warnung unterdrückt oder um ein vorgegebenes Zeitintervall ausgesetzt, wenn die erkannte Aktivität des Kraftfahrzeugführers eine vorgegebene Schwelle überschreitet. Die Aktivität des Kraftfahrzeugführers kann beispielsweise anhand des Lenkwinkels und/oder der Lenkwinkelgeschwindigkeit bestimmt werden.

Aus der ebenfalls nachveröffentlichten EP 1 371 948 ist ein ähnliches Fahrerassistenzsystem bekannt, wobei ein Einleiten der Warnung in Abhängigkeit der Fahrzeugposition durchgeführt werden kann.

Die nachveröffentlichte WO 2004/088611 A offenbart ein System zur Unterstützung der Spurhaltung eines Kraftfahrzeugs. Das System umfasst eine Kombination mehrerer Warnhinweise (optisch, akustisch, haptisch), welche vom System aktiviert werden, wenn im Hinblick auf das Annähern oder Überschreiten einer Fahrbahnbegrenzung eine Gefahrsituation hervorgerufen wird. Die Warnungen können dabei teilweise oder vollständig deaktiviert werden. Eine Deaktivierung oder Unterdrückung der Warnung kann dabei aufgrund von verschiedenen Fahrzeuggeschwindigkeiten oder geografischen Gegebenheiten eingestellt bzw. durchgeführt werden.

Aus der US 5,765,116 ist ein System zur Unterstützung der Spurhaltung bekannt, welches bei Hervorrufen einer Gefahrsituation eine Warnung einleitet, wobei eine derartige Warnung deaktiviert bzw. unterdrückt werden kann. Die Unterdrückung kann beispielsweise in Abhängigkeit der Fahrzeuggeschwindigkeit durchgeführt werden.

Des Weiteren ist aus der EP 0 736 414 A ein System bekannt, welches zur Spurhaltung eines Kraftfahrzeugs ausgelegt ist und bei Hervorrufen einer Gefahrsituation im Hinblick auf ein Annähern und Überschreiten an eine derartige Fahrbahnbegrenzung ein Warnhinweis eingeleitet wird. Der Warnzeitpunkt wird beispielsweise vom System in Abhängigkeit von der detektierten Natur dieses äußeren, überwachten Fahrbahnbereichs derart gewählt, dass dem Fahrer angepasst an die jeweilige Situation genügend Zeit und Raum bleibt, um das Fahrzeug sicher auf der Fahrspur zu halten bzw. auf diese zurückführen zu können.

Des Weiteren ist aus der EP 1 049 051 A ein System zur automatischen Fahrspurerkennung bekannt. Diese gibt eine entsprechende Warninformation über das Verlassen der Fahrspur ab, wenn beispielsweise kein Blinker gesetzt ist, wobei als Warninformation beispielsweise ein Nagelbandrattern für eine vorgegebene Zeitdauer in Verbindung mit einer optischen Anzeige erzeugt wird.

Aus der WO 03/004299 A ist eine Anzeigevorrichtung für ein fortbewegungsmittelbezogenes Assistenz-/Unterstützungssystem für ein Fahrzeug bekannt. Als derartige Systeme werden beispielsweise Spurverlassenswarnungssysteme oder Spurhaltungsunterstützungssysteme genannt. Verschiedene Zustände des Systems können angezeigte werden, wobei diesbezüglich auch Warnungen mit umfasst sind.

Des Weiteren ist aus der JP 10 198876 A ein System für ein Fahrzeug bekannt, bei dem ein Minimalabstand zwischen aufeinanderfolgenden Warnungen des Systems eingestellt werden kann.

Des Weiteren ist aus der EP 1 087 360 A2 ein Fahrerassistenzsystem gemäß dem Oberbegriff des Hauptanspruchs bekannt.

Zur Steigerung der Sicherheit und des Fahrkomforts bei Kraftfahrzeugen werden in modernen Fahrzeugen Fahrerassistenzsysteme integriert. Diese können zur Unterstützung des Fahrers, zur Information des Fahrers und/oder zur Warnung des Fahrers dienen. Eines dieser Fahrerassistenzsysteme ist ein sogenanntes Lane-Departure-Warning-System (LDW-System), das zur Unterstützung der Spurhaltung dient und den Fahrer durch Warnung an einem ungewollten Verlassen der Fahrspur hindern soll. Bei diesen Systemen werden dem Fahrer bei einer Gefahrsituation, d.h. bei einer Annäherung an eine Fahrspurbegrenzung Warnungen in Form von akustischen, haptischen und/oder optischen Warnsignale übermittelt oder Gegenmaßnahmen eingeleitet.

Die Warnungen werden hierbei in der Regel entweder in Abhängigkeit von der vorausberechneten Zeit oder der verbleibenden seitlichen Wegstrecke bis zum Überfahren der Fahrspurmarkierung ausgelöst. Weiterhin kann die Warnung des LDW-Systems bei dem Vorliegen bestimmter Bedingungen unterdrückt oder abgebrochen werden. Eine solche Unterdrückung oder ein solcher Abbruch erfolgt bislang bei Situationen, in denen die Bestimmung eines ungewollten Verlassens der Fahrspur aufgrund von Umgebungsbedingungen nicht oder nur schwierig möglich ist, z.B. wenn die Fahrspurerkennung zu schlecht ist, die Spurbreite zu niedrig oder zu hoch ist, die Spurkrümmung bzw. der Kurvenradius zu eng oder zu weit ist. Auch in Fällen, in denen die Geschwindigkeit des Fahrzeugs zu niedrig oder zu hoch ist, kann die Warnfunktion des LDW-System abgebrochen werden. Schließlich erfolgt die Warnung nicht, wenn der Fahrer lenkt, bremst, oder den Blinker betätigt.

Diese Systeme geben bereits eine gewisse Sicherheit, die aber nicht allen Situationen gerecht werden kann.

Es ist daher Aufgabe der vorliegenden Erfindung ein Fahrerassistenzsystem zur Unterstützung der Spurhaltung, insbesondere ein LDW-System zu schaffen, mittels dessen der Fahrkomfort gesteigert werden kann ohne die Sicherheit, die durch das Fahrerassistenzsystem geliefert wird, zu beeinträchtigen, wobei eine Unterdrückung einer Warnung des Fahrerassistenzsystems präziser feststellbar sein soll.

Diese Aufgabe wird erfindungsgemäß gelöst durch ein Fahrerassistenzsystem zur Unterstützung der Spurhaltung, nach Anspruch 1.

Unter Fahrerassistenzsystem zur Unterstützung der Spurhaltung eines Kraftfahrzeugs wird im Sinne dieser Erfindung insbesondere ein LDW-System verstanden, wobei die Warnung in Form eines akustischen, haptischen und/oder optischen Warnsignals oder in Form der Einleitung von Gegenmaßnahmen erfolgen kann. Als Gefahrensituation wird insbesondere das Erreichen der Fahrbahnbegrenzung bzw. das Überfahren der Fahrbahnbegrenzungsmarkierung bezeichnet. Eine Warnung, die aufgrund der Ermittlung des Eintritts der Gefahrensituation in Abhängigkeit der verbleibenden Zeit bis zum Eintritt der Gefahrensituation erfolgt, wird im Sinne dieser Erfindung als zeitabhängige Warnung bezeichnet, und eine Warnung, die aufgrund der Ermittlung des Eintritts der Gefahrensituation in Abhängigkeit von der verbleibenden seitlichen Wegstrecke zu dem Ort der Gefahrensituation erfolgt, wird als ortsabhängige Warnung bezeichnet. Die verbleibende Zeit und die verbleibende Wegstrecke werden im Sinne der Erfindung als Warngrößen bezeichnet.

Indem aktuelle Fahrzeugzustände werden überwacht und für die Unterdrückung von Warnungen berücksichtigt werden, wird es möglich, Warnungen, die aufgrund der aktuellen Bedingungen nicht notwendig oder sogar gefährlich wären, zu unterdrücken. Insbesondere werden nicht nur Bedingungen berücksichtigt, die die Funktionsfähigkeit des Fahrerassistenzsystems beeinflussen. Vielmehr werden Bedingungen berücksichtigt, die einen Rückschluss auf die Bedürfnisse des Fahrers erlauben.

Der erste aktuelle Fahrzeugzustand, der für die Unterbrechung der Warnung berücksichtigt wird, stellt den Zustand des Fahrerassistenzsystems zur Unterstützung der Spurhaltung dar.

Fahrerassistenzsysteme werden in der Regel betätigt, d.h. greifen ein, wenn eine kritische Fahrsituation bevorsteht oder eintritt. In dieser Situation könnte eine Warnung den Fahrer unnötig belästigen und dessen notwendige Konzentration stören, so dass eine solche Unterdrückung der Warnung sowohl die Sicherheit als auch den Fahrkomfort steigert.

Ein weiteres Fahrerassistenzsystem, dessen Zustand für die Unterdrückung der Warnung berücksichtigt wird, ist ein ESP- oder ein ASR-System. In Situationen, in denen ein solches System eingreift, treten in der Regel Längs- und Querbeschleunigungen auf, bei denen davon auszugehen ist, dass der Fahrer wach und aufmerksam ist. Zudem sind solche Situationen fahrdynamisch kritisch, so dass der Fahrer nicht zusätzlich durch eine Warnung abgelenkt werden sollte.

Des Weiteren ist der Zustand des Fahrerassistenzsystems zur Unterstützung der Spurhaltung selber für die Unterdrückung berücksichtigt. Hierbei wird der Beginn einer Warnung durch das Fahrerassistenzsystem überwacht. Unter Berücksichtigung dieser Größen können eine Maximaldauer der Unterbrechung und ein Minimalabstand zwischen aufeinanderfolgenden Warnungen eingestellt werden. Es wird daher die Unterdrückung der Warnung bei Erreichen einer vorgegebenen Maximaldauer seit dem Beginn einer Warnung durch das Fahrerassistenzsystem eingeleitet.

Eine weitere Fahrzeugkomponente kann weiterhin ein Bedienelement, insbesondere den Blinkerhebel, des Kraftfahrzeugs darstellen und der Zustand des Bedienelements kann dessen Stellung darstellen. Die Stellung des Blinkerhebels wird vorzugsweise berücksichtigt, um die Richtung zu bestimmen, in der eine Warnung unterdrückt werden soll. Wird beispielsweise der rechte Blinker betätigt, so werden nur Warnungen unterdrückt, die sich auf Geschehnisse beziehen, die auf der rechten Seite auftreten würden. Da der Fahrer durch Betätigen des Blinkers anzeigt, dass er das Fahrzeug in diese Richtung lenken will, ist eine Warnung bei einem Spurverlassen in dieser Richtung nicht notwendig. Andererseits kann die Warnung für Geschehnisse, die auf der Gegenseite auftreten, weiterhin erfolgen, so dass die Sicherheit gegenüber Fahrerassistenzsystemen erhöht ist, bei denen Warnungen vollständig unterdrückt werden, wenn der Blinkerhebel betätigt wird.

Die Unterbrechung oder deren Art kann weiterhin durch die Zustände der Fahrzeugumgebung beeinflusst werden, wobei diese beispielsweise die Änderung der Fahrspurbreite darstellen kann. Überschreitet die Fahrspurbreitenänderung einen definierten Grenzwert, so ist davon auszugehen, dass es zu Fehlwarnungen kommen wird. In dieser Situation ist daher eine Unterdrückung der Warnung sinnvoll. Eine extreme Änderung der Fahrspurbreite, d.h. ein Aufweiten oder eine Verengung, kann beispielsweise bei Aus- bzw. Auffahrten auf der Autobahn auftreten.

Weiterhin kann erfindungsgemäß die Position des Fahrzeugs zu einer bestimmten Stelle in der Umgebung berücksichtigt werden, wobei diese vorzugsweise die Position des Fahrzeugs bezüglich der Fahrbahnbegrenzung nach der Überfahrung der Fahrbahnbegrenzung darstellt. Durch diese Einflussgröße kann eine Warnung unterdrückt werden bis ein Fahrzeug nach dem Überfahren einer Fahrspurbegrenzung wieder auf die Fahrspur zurückgekehrt ist. Wird die Warnung in dieser Zeit nicht unterdrückt, würde der Fahrer bei dem Zurückkehren auf die Spur, da er hierzu erneut die Begrenzung überfahren muss, gewarnt, was als unangenehm empfunden werden würde.

In einer Ausführungsform ist die Warnung richtungsabhängig, d.h. zur Auslösung der Warnung wird eine bestimmte Richtung zugrunde gelegt, und die Unterdrückung erfolgt selektiv für die Warnung bezüglich Gefahren in einer Richtung, wohingegen die Warnung bezüglich Gefahren in der anderen Richtung nicht unterdrückt wird. Diese richtungsabhängige Unterdrückung weist den Vorteil auf, dass diese unterschiedlichen Situationen auf den beiden Seiten des Kraftfahrzeugs Rechnung tragen kann.

Die Erfindung wird im Folgenden anhand der beiliegenden Figuren erläutert, wobei:
Figur 1: eine schematische Blockdarstellung einer Ausführungsform einer Vorrichtung zum Betreiben eines Fahrerassistenzsystems zeigt; und
Figur 2: eine schematische Blockdarstellung einer weiteren Ausführungsform einer Vorrichtung zum Betreiben eines Fahrerassistenzsystems zeigt.

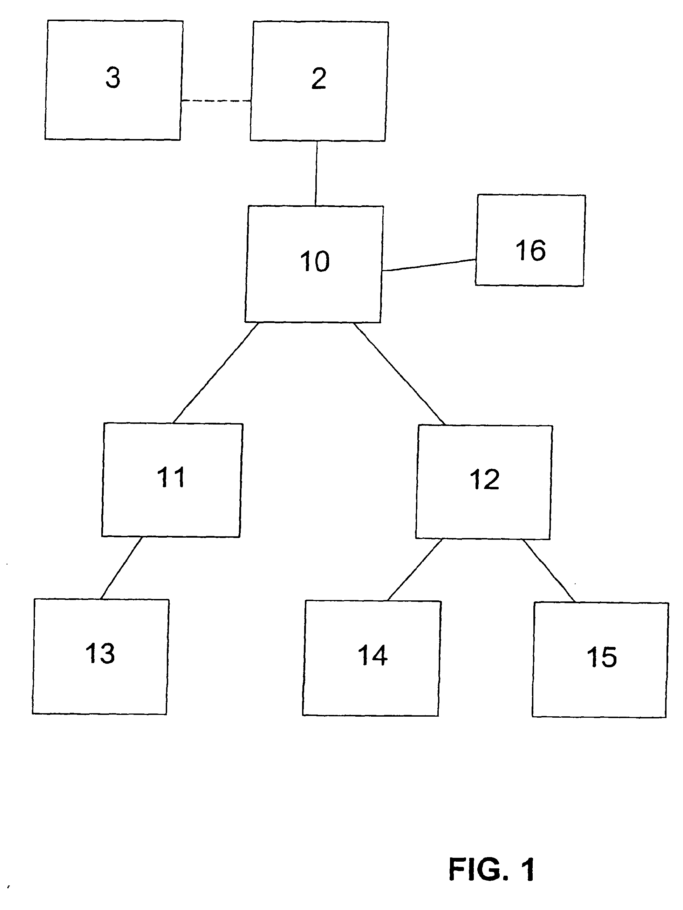

In Figur 1 ist schematisch eine Ausführungsform einer Vorrichtung zum Betreiben eines Fahrerassistenzsystems dargestellt. Das Fahrerassistenzsystem ist in der dargestellten Ausführungsform ein LDW-System. Die Vorrichtung umfasst in der dargestellten Ausführungsform eine Zentraleinheit 10, eine Einheit 11 zur Bestimmung des Eintritts einer Gefahrensituation in Abhängigkeit der verbleibenden Zeit, eine Einheit 12 zur Bestimmung des Eintritts einer Gefahrensituation in Abhängigkeit der verbleibenden seitlichen Wegstrecke zu dem Ort der Gefahrensituation, eine Anzahl von Erfassungseinrichtungen 13, 14, 15 und 16, sowie eine Speichervorrichtung 2. Die Erfassungseinrichtungen 13, 14, 15 und 16 können beispielsweise Sensoren oder andere Messvorrichtungen darstellen. Weiterhin ist das Fahrerassistenzsystem 1 mit einer Schutzvorrichtung 3 verbunden. Diese kann beispielsweise einen Airbag in dem Kraftfahrzeug darstellen.

Über die Erfassungseinrichtung 13 können in der dargestellten Ausführungsform die Daten erfasst werden, die zur Bestimmung des Gierwinkelfehlers des Kraftfahrzeugs oder der Driftgeschwindigkeit des Fahrzeugs relativ zu der Fahrspurbegrenzung notwendig sind. Diese Daten werden an die Einheit 11 übermittelt, in der daraus die verbleibende Zeit bis zum Eintritt der Gefahrensituation, d.h. bis zum Verlassen der Spur bzw. Überfahren der Spurbegrenzung, bestimmt wird.

Weiterhin werden in der dargestellten Ausführungsform von den Erfassungseinrichtungen 14 und 15 die Daten erfasst, die für die Bestimmung des Abstands zu der Spurbegrenzung, d.h. der verbleibenden seitlichen Wegstrecke zu dem Ort der Gefahrensituation, notwendig sind. Diese Daten werden an die Einheit 12 übermittelt, in der die verbleibende seitliche Wegstrecke bis zum Eintritt der Gefahrensituation, d.h. bis zum Verlassen der Spur oder Überfahren der Spurbegrenzung, bestimmt wird.

Die Daten über die verbleibende Zeit und die verbleibende Strecke werden an die Zentraleinheit 10 übermittelt, in der diese mit Schwellwerten verglichen werden. Die Schwellwerte werden in der Zentraleinheit 10 eingestellt. Hierzu können Angaben oder Daten weiterer Erfassungsvorrichtungen 16 oder aber auch der Erfassungsvorrichtungen 13, 14 und 15, die für die Einheiten 11 und 12 verwendet werden, benutzt werden. Die von den Einheiten 11 und 12 zur Verfügung gestellten Daten werden mit denen der Schwellwerte verglichen, wobei stets eine Annäherung von oben an den Schwellwert erfolgt, d.h. die Schwellwerte stellen Minimalwerte dar.

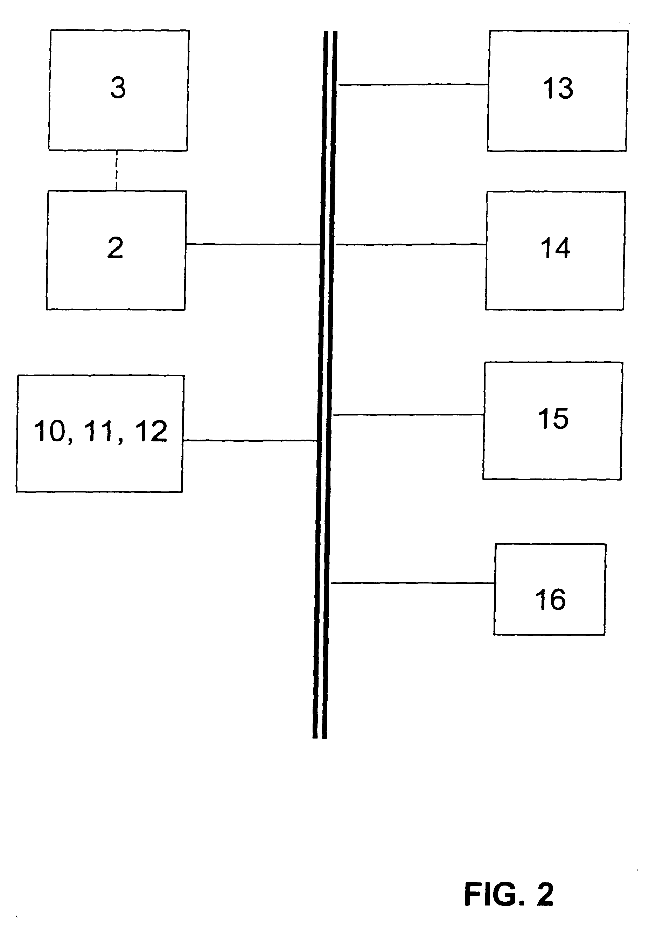

Die Einheiten 11 und 12 können durch Softwareprogramme innerhalb der Zentraleinheit 10 realisiert sein. Weiterhin kann, wie in Figur 2 schematisch dargestellt, die Verbindung zwischen den einzelnen Erfassungsvorrichtungen 13 bis 16 und den einzelnen Einheiten über einen gemeinsamen Datenbus, zum Beispiel den CAN-Bus realisiert sein, wodurch die Angaben und Daten der einzelnen Erfassungsvorrichtungen allen Einheiten 10, 11 und 12 zur Verfügung gestellt werden können. Auch die Schutzvorrichtung 3 oder ein damit verbundenes Steuergerät kann mit dem Datenbus verbunden sein.

Die Funktionsweise einer Ausführungsform des LDW-Systems gemäß der vorliegenden Erfindung wird im Folgenden beispielhaft beschrieben.

Die Schritte, die während des Betriebs des LDW-Systems durchgeführt werden, müssen nicht in der angegebenen Reihenfolge erfolgen. Im wesentlichen werden von dem LDW-System die folgenden Aktionen ausgeführt:
- Erfassung von Daten und Angaben für die Bestimmung des Eintritts einer Gefahrensituation, für die Einstellung des Schwellwerts für die Auslösung der Warnung und für die Unterdrückung der Warnung
- Einstellung des Schwellwerts / der Schwellwerte (falls ortsabhängig und zeitabhängig Ermittlung durchgeführt wird)
- Überprüfung des Erreichens des Schwellwerts zur Auslösung der Warnung
- Überprüfung des Vorliegens von Vermeidungsbedingungen
- Einschreiben der Vermeidungsbedingungen in eine Speichervorrichtung
- Auslösen einer Warnung
- Einschreiben der Warnungsauslösung in die Speichervorrichtung
- Überprüfung des Vorliegens von Unterbrechungsbedingungen
- Einschreiben der Unterbrechung in die Speichervorrichtung
- Überprüfung des Zustands einer Schutzvorrichtung
- Einschreiben des Zustands der Schutzvorrichtung in die Speichervorrichtung oder Steuerung des Einschreibens von Angaben über den Zustand des Fahrerassistenzsystems in die Speichervorrichtung in Abhängigkeit des Zustands der Schutzvorrichtung

Diese Schritte können zum größten Teil simultan durchgeführt werden. Sobald das LDW-System aktiviert wird, werden die Daten und Angaben entweder speziell für das LDW-System erfasst oder von Erfassungsvorrichtungen, beispielsweise über einen Datenbus, zur Verfügung gestellt.

Bei aktiviertem Fahrerassistenzsystem werden ständig die Bedingungen in und um das Fahrzeug erfasst. Hierzu können Sensoren oder andere Messeinrichtungen verwendet werden. Aufgrund der erfassten Daten und Angaben wird der Schwellwert für die Auslösung einer Warnung eingestellt. Die Bedingungen können einzeln oder gemeinsam berücksichtigt werden, wobei einige für eine Seite des Fahrzeugs bzw. der Fahrspur anders als für die andere Seite eingestellt werden können.

Bei der Einstellung des Schwellwerts wird dieser in Abhängigkeit der erfassten Angaben gegenüber einem Normalwert entweder herauf- oder herabgesetzt. Der Normalwert kann in dem Fahrerassistenzsystem fest einprogrammiert sein.

Die folgenden Bedingungen können zum Heraufsetzen des Schwellwerts für die Auslösung der Warnung und damit zu einer frühzeitigen Warnung führen.

Der Fahrer ist müde und hat daher eine längere Reaktionszeit. Die Fahrbahnbegrenzung ist eine durchgezogene Linie bzw. es befinden sich Objekte auf der Nachbarspur bzw. an der Fahrbahngrenze, wie beispielsweise eine Leitplanke, da hierbei das Überfahren der Fahrbahnbegrenzung eine größere Gefahr darstellt, als wenn die Nachbarspur frei ist oder die Fahrbahnbegrenzung eine gestrichelte Linie ist.

Ein Heruntersetzen des Schwellwerts, d.h. eine spätere Warnung, kann bei folgenden Bedingungen vorgenommen werden:
- das Fahrzeug befindet sich auf einer kurvenreichen Strecke - da hier in der Regel die Kurven geschnitten werden und ein frühzeitiges Warnen als störend empfunden würde;
- das Fahrzeug bewegt sich mit hoher Geschwindigkeit - da hier die Fahrer die Tendenz haben, die gesamte Fahrspurbreite auszunutzen;
- das Fahrzeug befindet sich auf einer schmalen Straße - da hier der Raum zwischen den Spurbegrenzungen gering ist.

Diese Bedingungen werden überprüft und entsprechend Ihrer Wichtigkeit bei der Einstellung des Schwellwerts für die Warnung berücksichtigt. Vorzugsweise werden die Bedingungen in Kombination berücksichtigt. So kann zwar ein Fahren auf einer kurvenreichen Strecke in der Regel eine Herabsetzung des Schwellwerts bedingen; ist aber gleichzeitig die Geschwindigkeit des Fahrzeugs niedrig, so kann der Schwellwert dennoch auf ein höheres Niveau eingestellt werden.

Werden für die Auslösung der Warnung unterschiedliche Ermittlungsarten verwendet, wird insbesondere der Eintritt einer Gefahrensituation in Abhängigkeit der verbleibenden Zeit bis zum Überfahren der Fahrbahnbegrenzung und in Abhängigkeit der verbleibenden seitlichen Wegstrecke ermittelt, so werden für diese unterschiedlichen Ermittlungsarten unterschiedliche Schwellwerte eingestellt. Die Schwellwerte für die beiden Ermittlungsarten werden ebenfalls unter Berücksichtigung der oben genannten Eingangsgrößen, die die Bedingungen in und um das Fahrzeug betreffen, eingestellt. Allerdings wird hierbei zusätzlich ein Verhältnis zwischen den beiden Schwellwerten berücksichtigt. Vorzugsweise wird der Schwellwert für die zeitabhängige Warnung so eingestellt, dass dieser früher erreicht wird als der Schwellwert für die ortsabhängige Warnung. So kann sichergestellt werden, dass die zeitabhängige Warnung früher anspricht, was zu einer Steigerung der Sicherheit führt. Sollte die zeitabhängige Warnung nicht ansprechen, so wird eine Warnung aufgrund der ortsabhängigen Warnung ausgeführt.

Sobald erkannt wird, dass der oder einer der Schwellwerte erreicht wurde, wird unmittelbar überprüft, ob ein Grund vorliegt, die Warnung zu unterdrücken. Diese Überprüfung kann entfallen, wenn beim Vorliegen eines Unterdrückungsgrunds automatisch die Auslösung von Warnungen blockiert wird.

Gründe für eine Unterdrückung der Warnung, d.h. in diesem Fall der Verhinderung einer Warnung bevor diese ausgelöst wird, können aufgrund zeitlich vorangegangener Geschehnisse oder anstehender Geschehnisse sowie aufgrund von Bedingungen in und um das Fahrzeug bestehen.

Eine Warnung wird unterdrückt, wenn davon auszugehen ist, dass der Fahrer aufmerksam ist. Dies kann durch den Eingriff eines ESP-Systems oder eines ASR-Systems erkannt werden. In Situationen, in denen ein solches System eingreift, treten in der Regel Längs- und Querbeschleunigungen auf, bei denen davon auszugehen ist, dass der Fahrer wach und aufmerksam ist. Zudem sind solche Situationen fahrdynamisch kritisch, so dass der Fahrer nicht zusätzlich durch eine Warnung abgelenkt werden sollte.

Weiterhin kann eine Verhinderung einer Warnung erfolgen, wenn von dem LDW-System innerhalb einer definierten vorausgehenden Zeitspanne eine Warnung ausgegeben wurde. Diese Zeitspanne kann beispielsweise einige Sekunden betragen. Durch diese Unterdrückung kann beispielsweise vermieden werden, dass ein Fahrer durch häufige, direkt aufeinanderfolgende Warnungen irritiert wird, wenn dieser beispielsweise nahe entlang einer Spurbegrenzungslinie fährt. Außerdem ist dieser Unterdrückungsgrund sinnvoll vor dem Hintergrund, dass ein Fahrer in der Regel auf eine Warnung des LDW-Systems reagiert. Diese Reaktion ist meist ein Gegenlenken, d.h. ein Wegsteuern von der Fahrspurbegrenzung, an die er sich zu nahe angenähert hat. Dieses Gegensteuern bewirkt, insbesondere, wenn es zu stark ausgeführt wird, ein sofortiges Annähern an die Spurbegrenzung auf der gegenüberliegenden Seite. Eine erneute Warnung ist aber für diese Annäherung nicht notwendig, da davon auszugehen ist, dass der Fahrer aufgrund der ersten Warnung aufmerksam ist.

Abhängig von dem Unterdrückungsgrund kann mit dem LDW-System auch die Art der Unterdrückung festgelegt werden. So kann beispielsweise die Unterdrückung nur auf Warnungen angewandt werden, die sich auf Gefahrensituationen auf einer Seite des Fahrzeugs bzw. auf eine Fahrspurbegrenzung beziehen.

Eine solche richtungsabhängige Unterdrückung kann beispielsweise bei dem genannten Unterdrückungsgrund einer zuvor ausgelösten Warnung des LDW-Systems sinnvoll sein. Hierbei kann die Unterdrückung sich beispielsweise auf die Gegenseite beschränken, d.h. auf die Seite, die der Seite gegenüberliegt, aufgrund derer die erfolgte Warnung ausgelöst wurde.

Alternativ kann statt der Unterdrückung eine Einstellung eines niedrigeren Schwellwerts vorgenommen werden. Soll beispielsweise die Warnung nur auf einer Seite reduziert werden, so kann für diese Seite der Schwellwert heruntergesetzt werden, wohingegen der Schwellwert für die Gegenseite beibehalten wird. Diese Art der Unterdrückung bringt den Vorteil mit sich, dass, wenn auch spät, in jedem Fall eine Warnung erfolgt. Allerdings sollte diese Art der Unterdrückung nur für solche Unterdrückungsgründe eingesetzt werden, bei denen nicht von einer häufigen Warnung und damit Belästigung des Fahrers auszugehen ist.

Weiterhin kann die Unterdrückung einer Warnung auch selektiv nach der zur Ermittlung der der Warnung zugrunde liegenden Ermittlungswerte verwendeten Ermittlungsart erfolgen. So kann beispielsweise eine Unterdrückung sich ausschließlich auf eine Warnung beziehen, die aufgrund zeitabhängiger Werte ausgelöst werden würde. Damit kann die Warnung, die aufgrund der Time-to-line-Crossing (TLC) Bestimmung ausgegeben würde, unterdrückt werden, während eine ortsabhängige Warnung weiterhin zugelassen werden würde.

Eine solche selektive Unterdrückung kann auch nur auf eine Seite angewendet werden. So kann, wie oben beschrieben, eine Unterdrückung der zeitabhängigen Warnung auf die Seite begrenzt werden, die der Seite gegenüberliegt, auf der in einer begrenzten vorausgegangenen Zeit bereits eine Warnung erfolgt ist. Dies hat den Vorteil, dass Warnungen in Folge der Reaktion des Fahrers auf eine vorherige Warnung unterdrückt werden, ein tatsächliches Überfahren der Linie aber aus Sicherheits- und Transparenzgründen nach wie vor zu einer Warnung führt.

Ein weiterer Unterdrückungsgrund, der ebenfalls richtungsabhängig ist, kann die Betätigung eines Blinkers sein. Diese kann über die Blinkhebelstellung erkannt werden. Wird beispielsweise der rechte Blinker betätigt, so werden nur Warnungen unterdrückt, die sich auf Geschehnisse beziehen, die auf der rechten Seite auftreten würden. Da der Fahrer durch Betätigen des Blinkers anzeigt, dass er das Fahrzeug in diese Richtung lenken will, ist eine Warnung bei einem Spurverlassen in dieser Richtung nicht notwendig. Diese richtungsabhängige Unterdrückung bringt aber auch noch weitere Vorteile mit sich. So kann die Anzahl an unterdrückten sinnvollen Warnungen reduziert werden, die erfolgen würde, wenn bei Betätigung des Blinkers die Warnungen auf beiden Seiten unterdrückt würden, ohne die Sicherheit zu mindern. Hat der Fahrer nämlich beispielsweise vergessen, den Blinker auszuschalten, so wird er zumindest auf einer Fahrspurseite weiterhin gewarnt. Zudem erhält der Fahrer bei einem gewollten Spurwechsel, bei dem er aus Versehen den Blinker in die falsche Richtung betätigt hat, eine Warnung. Da diese Situation durch die Fehlinformation des rückwärtigen Verkehrs durchaus kritisch sein kann, erscheint hier eine Warnung durchaus sinnvoll und angemessen.

Weiterhin kann eine Unterdrückung der Warnung bei einer Änderung der Fahrspurbreite erfolgen. Ändert sich die Fahrspurbreite innerhalb eines definierten Zeitraums oder innerhalb einer definierten Strecke um einen Betrag, der größer als ein vorgegebener Grenzwert ist, so kann die Warnung unterdrückt werden. Diese Unterdrückung ist sinnvoll, da es bei Fahrbahnverengungen, Fahrbahnaufweitungen oder dem kurzzeitigen Erkennen von falschen Spurmarkierungslinien, z.B. bei Ausfahrten, zu Fehlwarnungen kommen kann.

Schließlich können Warnungen unterdrückt werden, wenn die Position des Fahrzeugs zu bestimmten Stellen in der Umgebung des Fahrzeugs dies notwendig machen. Dies ist der Fall, wenn nach einer erfolgten LDW-Wamung der Abstand zwischen der Fahrzeugaußenkante und der Fahrspurmarkierung einen definierten Grenzwert unterschreitet oder das Fahrzeug die Spurmarkierung überfährt, wobei letzteres auch ohne vorherige Warnung geschehen kann. In diesem Fall sollte die Warnung unterdrückt werden, da andernfalls auch bei dem Vorgang des "sich wieder in die Spur Begebens" eine Warnung ausgegeben würde. Dies ist vom Fahrer in der Regel nicht gewünscht und wird als störend empfunden. Durch die ortsabhängige Unterdrückung der Warnung nach einer erfolgten Warnung kann dies vermieden werden.

Die Unterdrückung, die vor der Auslösung der Warnung erfolgt, d.h. die Vermeidung der Warnung, kann in eine Speichervorrichtung eingeschrieben werden. Vorzugsweise wird in diese Speichervorrichtung auch der Grund der Unterdrückung eingeschrieben. Diese Dokumentation der Unterdrückung kann im Falle eines Unfalls Auskunft darüber geben, ob das LDW-System funktionsfähig war.

Vorzugsweise wird beim Vorliegen eines Unterdrückungsgrunds eine Blockierung der Warnung automatisch ausgelöst, so dass ein aufwendiger Überprüfungsvorgang beim Erreichen des Schwellwerts durch einen der Ermittlungswerte nicht notwendig ist.

Liegen keine Unterbrechungsgründe vor, so wird die Warnung ausgelöst, d.h. ein optisches, akustisches oder haptisches Signal an den Fahrer gegeben und / oder eine Gegenmaßnahme, wie beispielsweise ein Gegenlenken, eingeleitet.

Auch das Ausführen von Warnungen kann in eine Speichervorrichtung eingeschrieben werden, die identisch mit der Speichervorrichtung sein kann, in die die Unterdrückung und die Unterdrückungsgründe eingeschrieben werden.

Auch während die Warnung ausgeführt wird, können Bedingungen auftreten, die eine Unterdrückung, in diesem Fall ein Unterbrechen der Warnung, notwendig machen.

Wird beispielsweise während einer begonnenen Warnung ein Eingriff eines anderen Fahrerassistenzsystems, wie eines ESP- oder ASR-Systems erkannt, so kann die Warnung unterbrochen werden. Wie oben bereits beschrieben, ist in einer solchen Situation von einem aufmerksamen Fahrer auszugehen und die Warnung könnte den Fahrer in dieser fahrdynamisch kritischen Situation ablenken.

Weiterhin wird eine Unterbrechung der Warnung vorgesehen werden, wenn eine definierte Maximaldauer der Warnung erreicht wurde. Vorzugsweise wird diese Maximaldauer individuell eingestellt. Diese Einstellung kann beispielsweise in Abhängigkeit der Ermittlungsart, aufgrund derer die Warnung erfolgt ist, geschehen.

Die Begrenzung der Maximaldauer hat den Vorteil, dass der Fahrer nicht durch zu lange Warnungen belästigt wird.

Auch bei einem Eingriff durch den Fahrer, z.B. durch Gegenlenken, kann die Warnung sofort unterbrochen werden. Im Vergleich zu einer konstanten Wamdauer ergibt sich somit der Vorteil, dass der Fahrer durch unterschiedliche Warndauern bei unterschiedlich schnellen und effektiven Fahrerreaktionen eine positive Rückmeldung über seine Handlung erhält.

Es kann vorgesehen sein, eine Mindestdauer für die Warnung vorzugeben, um sicher zustellen, dass der Fahrer die Warnung wahrnimmt. Diese Mindestdauer kann aber verkürzt werden, wenn während dieser Zeit einer der Abbruchgründe auftritt, beispielsweise ein ESP-System eingreift.

Weiterhin kann die Dauer der Unterbrechung von dem LDW-System beeinflusst werden. So kann beispielsweise eine Wamunterbrechung, die durch die Betätigung des Blinkerhebels erfolgt ist, sofort aufgehoben werden, sobald ein Spurwechsel in Richtung des Blinkens erfolgt ist. Ist die Funktion "Autobahnblinken" aktiviert, d.h. eine Funktion, bei der ein Nachlaufen des Blinkers nach kurzem Antippen erfolgt, wird die Dauer der Warnunterdrückung verlängert. Nach einem gewollten und durch Blinken angekündigten Spurwechsel ist der Bedarf für die Warnunterdrückung nicht mehr gegeben. Der Fahrer erwartet, wenn er anschließend über eine Spurbegrenzung fährt, dass er eine Warnung erhält. Ist dies nicht der Fall, leidet die Systemtransparenz darunter. Andererseits darf eine Warnunterdrückung in Folge des Blinkens nicht sofort abgebrochen werden, wenn der Blinkerhebel zurückgesetzt wird. Viele Fahrer tippen den Blinker vor dem eigentlichen Spurenwechsel nur kurz an, so dass der Blinker beim eigentlichen Überfahren der Linie schon wieder deaktiviert ist. Für diesen Fall kann eine zusätzliche Überprüfung des tatsächlichen Überfahrens durchgeführt werden, bevor die Unterdrückung aufgehoben wird.

Weiterhin kann die Dauer der Unterdrückung der Warnung durch die Position des Kraftfahrzeugs auf der Spur beeinflusst werden. So kann nach einer erfolgten LDW-Warnung die Unterbrechung aufrecht erhalten werden bis sich das Fahrzeug wieder vollständig in der Fahrspur befindet und die Fahrzeugaußenkante einen Mindestabstand zu der Spurmarkierung besitzt. Dabei ist der Grenzwert für die Wamunterdrückung größer zu definieren als der Schwellwert, der für die ortsabhängige Warnauslösung eingestellt wird. Dies ergibt eine Hysterese zwischen der Wamauslösung und dem Ende der Wamunterdrückung. Außerdem kann es bei LDW-Systemen bei Fahrt entlang der Linie, z.B. im Vorfeld eines Überholvorgangs auf Landstraßen, zu einem gehäuften Auftreten von vom Fahrer ungewollten (aber prinzipiell berechtigten) Warnungen kommen. Durch die ortsabhängige Warnunterdrückung, bei der die Position des Fahrzeugs berücksichtigt wird (Hysterese zu der Wamauslösung) kann die Anzahl dieser ungewünschten Warnungen reduziert werden.

Die Dauer der Unterdrückung kann für die beiden Seiten der Fahrspurbegrenzung unterschiedlich eingestellt werden.

Auch die Beendigung einer Unterdrückung kann in die Speichervorrichtung, gegebenenfalls zusammen mit dem Grund für die Aufhebung der Unterdrückung, geschrieben werden.

In der Speichereinrichtung werden in der Regel die Daten in regelmäßigen Zeitabständen überschrieben, wobei die Dauer bis zum Überschreiben der Daten beispielsweise auf 30 Sekunden eingestellt werden kann. Durch diese Art des Einschreibens in die Speichervorrichtung kann sichergestellt werden, dass bei einem Unfall Angaben über die Geschehnisse in den letzten 30 Sekunden vor dem Unfall zur Verfügung stehen. Bevorzugt wird hierzu das Einschreiben in die Speichervorrichtung unterbrochen, sobald eine Schutzvorrichtung aktiviert wird. Dies kann beispielsweise der Airbag des Kraftfahrzeugs oder die Sperrvorrichtung für den Sicherheitsgurt sein.

Die Speichervorrichtung, die in einem separaten Gehäuse aufgenommen sein kann, kann eine Schnittstelle aufweisen, über die ein Auslesen der eingeschriebenen Daten ermöglicht wird.

Mit der vorliegenden Erfindung wird es somit möglich die Sicherheit zu steigern ohne den Fahrkomfort durch unnötige Warnungen oder Fehlwarnungen zu beeinträchtigen.

## Patentansprüche

1. Fahrerassistenzsystem zur Unterstützung der Spurhaltung, bei dem das Fahrerassistenzsystem bei einer bevorstehenden Gefahrensituation eine Warnung einleitet, wobei für die Unterdrückung der Warnung zumindest zwei aktuelle Fahrzeugzustände berücksichtigt werden, wobei der erste aktuelle Fahrzeugzustand den Zustand des Fahrerassistenzsystems zur Unterstützung der Spurhaltung darstellt, wobei der Zustand des Fahrerassistenzsystems zur Unterstützung der Spurhaltung den Beginn einer Warnung durch das Fahrerassistenzsystem darstellt, und die Unterdrückung der Warnung bei Erreichen einer vorgegebenen Maximaldauer seit dem Beginn der Warnung durch das Fahrerassistenzsystem erfolgt,
**dadurch gekennzeichnet, dass**
der zweite Fahrzeugzustand den Betätigungszustand eines ESP- oder ASR-Systems darstellt, wobei die warnung unterdrückt wird, wenn das ESP- oder ASR-System eingreift.

2. Fahrerassistenzsystem nach Anspruch 1, **dadurch gekennzeichnet, dass** ein weiterer aktueller Fahrzeugzustand für die Unterdrückung der Warnung berücksichtigt wird, wobei der weitere aktuelle Fahrzeugzustand Zustände der Fahrzeugumgebung sowie die Position des Fahrzeugs zu einer bestimmten Stelle in der Umgebung darstellt.

3. Fahrerassistenzsystem nach einem der vorhergehenden Ansprüche, **dadurch gekennzeichnet, dass** ein weiterer aktueller Fahrzeugzustand für die Unterdrückung der Warnung berücksichtigt wird, wobei der weitere aktuelle Fahrzeugzustand die Stellung eines Blinkerhebels darstellt.

4. Fahrerassistenzsystem nach Anspruch 2, **dadurch gekennzeichnet, dass** die Zustände der Fahrzeugumgebung die Änderung der Fahrspurbreite darstellen.

5. Fahrerassistenzsystem nach Anspruch 2, **dadurch gekennzeichnet, dass** die Position des Fahrzeugs zu einer bestimmten Stelle in der Umgebung die Position des Fahrzeugs bezüglich der Fahrbahnbegrenzung nach der Überfahrung der Fahrbahnbegrenzung darstellt.

6. Fahrerassistenzsystem nach einem der vorhergehenden Ansprüche, **dadurch gekennzeichnet; dass** die Warnung richtungsabhängig ist und die Unterdrückung selektiv für die Warnung bezüglich Gefahren in einer Richtung erfolgt, wohingegen die Warnung bezüglich Gefahren in der anderen Richtung nicht unterdrückt wird.

## Claims

1. Lane tracking driver assistance system in which the driver assistance system triggers a warning in the event of an imminent hazardous situation, wherein at least two current vehicle states are taken into consideration for suppression of the warning, the first current vehicle state represents the state of the lane tracking driver assistance system, the state of the lane tracking driver assistance system represents the beginning of a warning by the driver assistance system and the warning is suppressed when a predetermined maximum time duration has been reached since the beginning of the warning by the driver assistance system, **characterised in that** the second current vehicle state represents the activated state of an ESP or ASR system, the warning being suppressed when the ESP or ASR system intervenes.

2. Driver assistance system according to claim 1, **characterised in that** a further current vehicle state is taken into consideration for suppression of the warning, the further current vehicle state representing states of the vehicle environment and the position of the vehicle in relation to a specific point in the environment.

3. Driver assistance system according to one of the preceding claims, **characterised in that** a further current vehicle state is taken into consideration for suppression of the warning, the further current vehicle state representing the position of a direction indicator lever.

4. Driver assistance system according to claim 2, **characterised in that** the states of the vehicle environment represent the change in the width of the lane.

5. Driver assistance system according to claim 2, **characterised in that** the position of the vehicle in relation to a specific point in the environment represents the position of the vehicle relative to the lane boundary once it goes over the lane boundary.

6. Driver assistance system according to one of the preceding claims, **characterised in that** the warning is dependent on the direction and the warning relating to hazards in one direction is suppressed selectively, while the warning relating to hazards in the other direction is not suppressed.

## Revendications

1. Système d'assistance à la conduite pour aider à la tenue de route, dans lequel le système d'assistance à la conduite déclenche lors d'une situation dangereuse proche un avertissement, dans lequel pour la suppression de l'avertissement, au moins deux états de véhicule actuels sont pris en considération, dans lequel le premier état de véhicule actuel constitue l'état du système d'assistance à la conduite pour aider à la tenue de route, dans lequel l'état du système d'assistance à la conduite pour aider à la tenue de route représente le lancement d'un avertissement par le système d'assistance à la conduite, et la suppression de l'avertissement est effectuée lors de l'atteinte d'une durée maximale prescrite depuis le lancement de l'avertissement par le système d'assistance à la conduite,
**caractérisé en ce que**
le second état de véhicule constitue l'état d'actionnement d'un système EPS ou ASR, dans lequel l'avertissement est supprimé, lorsque le système ESP ou ASR s'enclenche.

2. Système d'assistance à la conduite selon la revendication 1, **caractérisé en ce qu'**un autre état de véhicule actuel est pris en considération pour la suppression de l'avertissement, dans lequel l'autre état de véhicule actuel représente des états de l'environnement de véhicule ainsi que la position du véhicule à un endroit déterminé dans l'environnement.

3. Système d'assistance à la conduite selon l'une quelconque des revendications précédentes, **caractérisé en ce qu'**un autre état de véhicule actuel est pris en considération pour la suppression de l'avertissement, dans lequel l'autre état de véhicule actuel représente la position d'une commande de clignotant.

4. Système d'assistance à la conduite selon la revendication 2, **caractérisé en ce que** les états de l'environnement de véhicule représentent la modification de la largeur de la voie de déplacement.

5. Système d'assistance à la conduite selon la revendication 2, **caractérisé en ce que** la position du véhicule représente à un endroit déterminé dans l'environnement la position du véhicule par rapport à la limite de chaussée après l'avoir dépassée.

6. Système d'assistance à la conduite selon l'une quelconque des revendications précédentes, **caractérisé en ce que** l'avertissement dépend de la direction et la suppression est effectuée de manière sélective pour l'avertissement par rapport aux dangers dans une direction, alors que l'avertissement n'est pas supprimé par rapport aux dangers dans l'autre direction.
